# EUROPÄISCHE PATENTSCHRIFT

(11) **EP 2 445 788 B1**
(45) Veröffentlichungstag und Bekanntmachung des Hinweises auf die Patenterteilung: **01.05.2013**
(21) Anmeldenummer: 10727402.9
(22) Anmeldetag: 23.06.2010
(51) Int. Cl.: B64D 1/22, B66D 3/18

(54) **Hubschrauber mit einer Lasthebevorrichtung**
Helicopter with a load lifting apparatus
Helicoptère avec un dispositif de soulèvement de charge

(30) Priorität: 23.06.2009 DE 102009030934
(43) Veröffentlichungstag der Anmeldung: 02.05.2012
(73) Patentinhaber: Schuster, Matthias, 71726 Benningen (DE)
(72) Erfinder: Schuster, Matthias, 71726 Benningen (DE)
(74) Vertreter: Witte, Weller & Partner
(86) Internationale Anmeldenummer: PCT/EP2010/058864
(87) Internationale Veröffentlichungsnummer: WO 2010/149678

(56) Entgegenhaltungen:
- CH-A- 104 859
- DE-A1- 3 323 513
- DE-A1- 4 418 354
- DE-A1- 19 950 405
- US-A- 4 152 019
- US-B1- 6 418 989

## Beschreibung

Die Erfindung betrifft einenHubschrauber, mit einer Lasthebevorrichtung, die ein Seil, von dem in einem Seilspeicher eine Vorratslänge vorhanden ist, wobei das Seil einerseits am Hubschrauber festgelegt ist und andererseits ein freies Ende aufweist, und ein Lastaufnahmeelement aufweist, das an dem Seil angeordnet ist und an dem eine zu hebende Last festgelegt werden kann, wobei das Seil von dem Seilspeicher entnommen werden kann, um das Lastaufnahmeelement vom Hubschrauber in die Tiefe abzulassen, wobei das Seil beim Ablassen bzw. Hochziehen des Lastaufnahmeelements an einer Krafteinleitungsstelle hubschrauberseitig angreift, wobei hubschrauberseitig zumindest eine von der Krafteinleitungsstelle beabstandete Seilanbindungsstelle vorhanden ist, an der das freie Ende des Seils festlegbar bzw. festgelegt ist.

Ein Hubschrauber mit einer derartigen Lasthebevorrichtung ist aus dem Dokument US 4,152,019 A bekannt.

US 4,152,019 offenbart ein Hebe- und Transportsystem für einen Hubschrauber mit einem Greifarm, der durch Seile an zumindest einer Winde und einem weiteren Haltepunkt am Hubschrauber festgelegt ist. Hierbei ist eine Hauptwinde und ein Hauptkabel, das auf die Winde aufwickelbar ist, zum Transport von im Greifarm aufgenommenen und zu einem Hauptpunkt herabgelassenen Material vorgesehen. Eine Hilfswinde und ein Hilfskabel, das auf die Hilfswinde aufwickelbar ist, sind dazu vorgesehen, den Greifarm von einem Hilfspunkt herabzulassen. Das Material kann durch den sich unter dem Hilfspunkt befindenden Greifarm gegriffen werden und anschließend vom Hauptpunkt herabgelassen transportiert werden. Angebracht an einem Hubschrauber befindet sich der Hauptpunkt in vertikaler Ausrichtung im Schwerpunkt des Hubschraubers und der Hilfspunkt ist unter dem Hubschrauber neben dem Pilotensitz gelegen.

Eine weitere Lasthebevorrichtung ist aus dem Dokument DE 33 23 513 A1 bekannt.

Eine Lasthebevorrichtung der eingangs genannten Art wird insbesondere in Rettungshubschraubern zur Bergung von verunglückten Personen verwendet. Häufiges Einsatzgebiet solcher Rettungshubschrauber ist das Gebirge und die See.

Die aus DE 33 23 513 A1 bekannte Lasthebevorrichtung weist einen Seilspeicher in Form einer Winde auf, auf der eine Vorratslänge an Seil gespeichert ist. Die Winde ist dort in der Zelle des Hubschraubers an der Decke montiert. Von der Winde ist das Seil entlang eines Auslegers aus der Zelle des Hubschraubers heraus nach außen geführt, wobei am Ende des Auslegers eine Umlenkrolle angeordnet ist, über die das Seil dann schwerkraftseitig nach unten weg führt. Die am Ende des Auslegers angeordnete Umlenkrolle stellt in diesem Fall die Krafteinleitungsstelle dar, an der das Seil beim Ablassen bzw. Hochziehen der Last hubschrauberseitig angreift.

Das Lastaufnahmeelement der bekannten Lasthebevorrichtung ist als Lasthaken ausgebildet, der am freien Ende des Seils befestig ist. An den Lasthaken kann dann im Fall der Bergung einer verunglückten Person das Bergegeschirr angehängt werden.

Bei der Bergung von Personen mittels eines Hubschraubers, der mit einer Lasthebevorrichtung wie der bekannten Lasthebevorrichtung ausgestattet ist, ergeben sich folgende Probleme. Da die Bergung aus der Luft erfolgt und das Seil entsprechend zur Aufnahme der zu bergenden Person auf die Bergestelle abgelassen wird, wirken auf die an dem Lastaufnahmeelement angehängte Last die nach unten gerichteten Abwinde des Hubschrauberrotors. Die Abwinde haben nicht nur eine nach unten gerichtete Komponente, sondern auch eine starke rotatorische Komponente in Drehrichtung des Rotors. Diese rotatorische Komponente ist ausreichend, die an dem Seil hängende Last in Drehung um die Seilachse zu versetzen. Im Fall, dass an dem Seil eine zu bergende Person hängt, wird diese entsprechend in Rotation um die Seilachse versetzt, wobei Drehgeschwindigkeiten von etwa 2 bis 3 Umdrehungen pro Sekunde erreicht werden. Die dabei auf die Person wirkenden Fliehkräfte sind so stark, dass sie von einem gesunden Menschen vielleicht noch ausgehalten werden können, nicht jedoch von einem geschwächten Menschen, beispielsweise einem Verletzten, der an einer Unglücksstelle geborgen werden soll. Diese Problematik besteht sowohl beim Aufnehmen der Last sowie beim Absetzen einer Last auf dem Boden, und insbesondere dann, wenn der Hubschrauber bei diesen Vorgängen sich nicht im Vorwärtsflug befindet, sondern in der Luft steht, während sich die rotatorischen Abwinde beim Vorwärtsflug des Hubschraubers weniger stark bemerkbar machen. Es wird daher häufig versucht, unmittelbar nach der Aufnahme der Last in den Vorwärtsflug überzugehen, bzw. umgekehrt, die Last im Vorwärtsflug abzusetzen. Diese Vorgehensweise ist jedoch in schwierigem Gelände, insbesondere im Gebirge, nicht ohne Weiteres möglich, beispielsweise, wenn eine Person aus einer tiefen Bergspalte geborgen werden muss.

Eine andere Möglichkeit der Vermeidung einer Rotation der am Seil hängenden Last besteht darin, dass eine Hilfsperson am Boden eine Antirotationsleine, die am Lastgeschirr befestigt ist, im Winkel von 45° bis 90° zum Seil der Lasthebevorrichtung unter Spannung abhält, wodurch eine Rotation der Last ebenfalls vermieden wird. Aber auch diese Vorgehensweise ist in schwierigem und schwer zugänglichem Gelände problematisch, insbesondere bei der Bergung von Personen auf See, wo es schwierig bis unmöglich ist, die Hilfsperson abzusetzen. Außerdem besteht der Nachteil, dass für eine Bergungsaktion mehr Personal und Ausrüstung benötigt wird.

Es besteht daher ein Bedürfnis an einer Lasthebevorrichtung für den Hubschrauber, bei der die vorstehend genannten Probleme vermieden werden.

Es sind auch Lasthebevorrichtungen bekannt, die Mehr-Seilsysteme verwenden. So ist beispielsweise in DE 2 021 040 A1 eine Lasthebevorrichtung beschrieben, bei der an jeder Ecke der Last ein Seil angeschlagen wird und die Seile von einzelnen Winden an Bord des Hubschraubers aufgewickelt werden. Eine solche Lasthebevorrichtung ist nicht nur konstruktiv aufwändig, sondern auch nachteilig im Fall, dass aufgrund einer Notsituation die Last abgeworfen werden muss, wozu dann alle vier Seile einzeln gekappt werden müssen. Zur Vermeidung dieses Problems wird in dem Dokument vorgeschlagen, an das hubschrauberseitig befestigte Lastseil einen Lastbalken zu befestigen, von dem wiederum eine Mehrzahl von Seilen nach unten abgehen.

Weitere solcher konstruktiv aufwändigen Lasthebevorrichtungen für Hubschrauber sind in den Dokumenten DE 1 253 058 A1, DE 1 106 605 A1, DE 1 456 092 und DE 2 210 084 beschrieben.

DE 44 18 354 A1 offenbart eine Lasthebevorrichtung zum Heben eines Kanals mit im Wesentlichen rechteckigem Querschnitt, wobei die Lasthebevorrichtung eine motorische Seilwinde und eine Seileinhängeeinrichtung aufweist, an denen ein Seil festgelegt ist. Das Seil wird mit zumindest zwei Winkelstücken an dem Kanal festgelegt, wobei das Seil beim Anheben des Kanals durch die Seilwinde entlang von Seilführungen der Winkelstücke mit den dazugehörigen Rollen geführt und umgelenkt wird.

CH 104 859 A offenbart einen Flaschenzug mit einem Antriebsmotor, der mit einer Schneckenwelle gekoppelt in ein Schneckenrad eingreift, wobei auf der Schneckenwelle beidenends Zahnkolben festsitzen, die je in ein Stirnrad eingreifen. Mit jedem Stirnrad ist eine Windetrommel fest verbunden, wobei in den Windetrommeln ein Drahtseil geführt wird.

US 6,418,989 B1 offenbart eine Greifvorrichtung zum Greifen von Baumstämmen für einen Hubschrauber, wobei die Greifvorrichtung mit Seilen auf der Unterseite des Hubschraubers festgelegt ist. Hierbei sind die Seile in einer Ebene angeordnet, die im Wesentlichen parallel zur Längsachse des Hubschraubers verläuft.

DE 199 50 405 A1 offenbart eine Vorrichtung zum Anhängen einer Last an einem Hubschrauber mit zumindest einem Tragseil, das ein bezüglich einer Längsachse des Hubschraubers außermittigen ersten Seilabschnitt und einen gegenüberliegenden außermittigen zweiten Seilabschnitt aufweist. Das Tragseil ist mit dem Hubschrauber einerseits und der Last andererseits verbunden. Hierbei weist das Tragseil Enden auf, die hubschrauberseitig fest angeschlagen sind, wobei das Tragseil relativ zur Last derart beweglich verbunden ist, dass die Last entlang des Tragseils verschiebbar ist. Der Erfindung liegt die Aufgabe zugrunde, einen Hubschrauber mit einer Lasthebevorrichtung der eingangs genannten Art dahingehend weiterzubilden, dass die Neigung der an dem Seil hängenden Last zur Rotation zumindest verringert wird, wobei die Lasthebevorrichtung dabei konstruktiv einfach ausgestaltet sein soll.

Gemäß eines ersten erfindungsgemäßen Aspekts wird diese Aufgabe hinsichtlich des eingangs genannten Hubschraubers mit einer Lasthebevorrichtung dadurch gelöst, dass das Lastaufnahmeelement entlang des Seils beweglich an dem Seil angeordnet ist, dass die zumindest eine Seilanbindungsstelle von der Krafteinleitungsstelle in Richtung quer zur Längsachse des Hubschraubers beabstandet ist, und dass die Krafteinleitungsstelle auf einer Seite der Längsmittelachse des Hubschraubers mit Abstand zu dieser und die Seilanbindungsstelle auf der anderen Seite der Längsmittelachse mit Abstand zu dieser angeordnet ist.

Gemäß eines weiteren erfindungsgemäßen Aspekts wird diese Aufgabe hinsichtlich des eingangs genannten Hubschraubers mit einer Lasthebevorrichtung dadurch gelöst, dass das Lastaufnahmeelement entlang des Seils beweglich an dem Seil angeordnet ist, dass die zumindest eine Seilanbindungsstelle von der Krafteinleitungsstelle in Richtung der Längsachse des Hubschraubers beabstandet ist, und dass die zumindest eine Seilanbindungsstelle und die Krafteinleitungsstelle seitlich auf einer selben Seite am Hubschrauber angeordnet sind.

Während die bekannten Lasthebevorrichtungen von einer Einpunktanbindung des Seils der Lasthebevorrichtung, und zwar lediglich an der Krafteinleitungsstelle des Seils in den Hubschrauber, ausgehen, geht die erfindungsgemäße Lasthebevorrichtung von einer Mehrpunktanbindung des Seils am Hubschrauber aus. Das Lastaufnahmeelement befindet sich dazu nicht mehr fest am freien Ende des Seils, sondern ist entlang des Seils beweglich am Seil festgelegt. Von der Krafteinleitungsstelle verläuft das Seil somit zum Lastaufnahmeelement und von dort weiter zu der von der Krafteinleitungsstelle beabstandeten zumindest einen Seilanbindungsstelle. Das Seil der erfindungsgemäßen Lasthebevorrichtung bildet somit von der Krafteinleitungsstelle bis zur Seilanbindungsstelle im Wesentlichen die Form eines V, wobei sich das Lastaufnahmeelement schwerkraftseitig an der tiefsten Stelle des V befindet. Eine Rotation des Seils um die Seilachse des Seilabschnitts von der Krafteinleitungsstelle bis zum Lastaufnahmeelement wird durch den vom Lastaufnahmeelement zur Seilanbindungsstelle verlaufenden Seilabschnitt vermieden, wenn die Beabstandung der Seilanbindungsstelle von der Krafteinleitungsstelle ausreichend groß gewählt ist; d.h. je größer der Winkel zwischen dem von der Krafteinleitungsstelle zum Lastaufnahmeelement verlaufenden Seilabschnitt und dem von dem Lastaufnahmeelement zu der Seilanbindungsstelle verlaufenden Seilabschnitt ist, desto weniger neigt das Lastaufnahmeelement zur Drehung aufgrund von rotatorischen Abwinden des laufenden Rotors. Ein weiterer Vorteil der Erfindung besteht durch die Lagestabilität des Seils darin, dass die angehängte Last durch eine Drehung des Hubschraubers um die Hochachse gedreht werden kann, um in eine bestimmte Position gebracht zu werden, was bspw. in der Bergrettung vorteilhaft ist.

Ein weiterer Vorteil der erfindungsgemäßen Lasthebevorrichtung besteht darin, dass durch die Umlenkung des Seils am Lastaufnahmeelement die zum Heben einer Last erforderliche Kraft halbiert wird. Das Lastaufnahmeelement wirkt nämlich aufgrund seiner Beweglichkeit relativ zum Seil als lose Rolle eines Flaschenzuges. Umgekehrt bedeutet dies, dass die doppelte Last gehoben werden kann.

Ein noch weiterer Vorteil der erfindungsgemäßen Lasthebevorrichtung, insbesondere gegenüber der aus dem eingangs genannten Dokument DE 33 23 513 A1 bekannten Lasthebevorrichtung, besteht darin, dass durch die Zweipunktanbindung des Seils am Hubschrauber und das längs des Seils bewegliche Lastaufnahmeelement letzteres im abgelassenen Zustand sich selbsttätig mehr oder weniger unter den Schwerpunkt des Hubschraubers bewegt, selbst wenn die Krafteinleitungsstelle von der Längsmittelachse des Hubschraubers weit beabstandet ist, wodurch von der zu hebenden Last verursachte Kippmomente auf den Hubschrauber verringert werden. Der Hubschrauber lässt sich mit der erfindungsgemäßen Lasthebevorrichtung bei angehängter Last somit leichter vom Piloten steuern als mit der bekannten Lasthebevorrichtung, bei der die von der Last verursachten Kippmomente deutlich größer sind und ein entsprechendes Gegensteuern durch den Piloten erfordern. Mit der erfindungsgemäßen Lasthebevorrichtung werden auf diese Weise auch gefährliche Flugsituationen vermieden bzw. verringert.

Die erfindungsgemäße Lasthebevorrichtung ist konstruktiv sehr einfach, weil sie wie die bekannte Lasthebevorrichtung mit nur einem Seil und nur einem Seilspeicher auskommt, ohne jedoch die Nachteile der bekannten Lasthebevorrichtung aufzuweisen.

Es können auch mehrere Seilanbindungsstellen vorgesehen sein, die am Hubschrauber verteilt angeordnet sind, so dass die für den jeweiligen Fall günstigste Seilanbindungsstelle gewählt werden kann.

An der zumindest einen Seilanbindungsstelle kann auch ein Hilfsseil angeschlagen sein, wobei das freie Ende des Tragseils dann an dem freien Ende des Hilfsseils befestigt wird bzw. ist.

Die zumindest eine Seilanbindungsstelle, die gemäß dem ersten Aspekt von der Krafteinleitungsstelle in Richtung quer zur Längsachse des Hubschraubers beabstandet ist, wobei die Krafteinleitungsstelle auf einer Seite der Längsmittelachse des Hubschraubers mit Abstand zu dieser und die Seilanbindungsstelle auf der anderen Seite der Längsmittelachse mit Abstand zu dieser angeordnet ist, ist insbesondere dann von Vorteil, wenn, wie bei der aus DE 33 23 513 A1 bekannten Lasthebevorrichtung, die Krafteinleitungsstelle im seitlichen Abstand zur Zelle des Hubschraubers angeordnet ist, weil durch die vorstehend genannte Maßnahme der Festlegung des freien Endes des Seils an der zumindest einen Seilanbindungsstelle auf der anderen Seite der Längsachse des Hubschraubers das Lastaufnahmeelement bei abgelassenem Seil nahe bei oder gar auf der Längsmittelebene des Hubschraubers zu liegen kommt, wodurch Kippmomente um die Längsachse des Hubschraubers reduziert bzw. ganz vermieden werden.

In einer bevorzugten Ausgestaltung des ersten Aspekts ist die zumindest eine Seilanbindungsstelle von der Krafteinleitungsstelle in Richtung der Längsachse des Hubschraubers beabstandet.Diese Maßnahme hat den Vorteil, dass Kippmomente um die Querachse des Hubschraubers, d.h. Kippmomente, die zu einem Kippen des Hubschraubers um die Querachse führen, verringert werden können. Befindet sich die Krafteinleitungsstelle beispielsweise in Längsrichtung des Hubschraubers gesehen hinter dem Schwerpunkt, wird die Seilanbindungsstelle vorzugsweise vor dem Schwerpunkt des Hubschraubers vorgesehen, bzw. umgekehrt.

Die zumindest eine Seilanbindungsstelle und die Krafteinleitungsstelle, die gemäß dem zweiten Aspekt seitlich auf einer selben Seite am Hubschrauber angeordnet sind, haben den Vorteil, dass die gesamte Lasthebevorrichtung bedienungsfreundlich auf derselben Seite des Hubschraubers angeordnet ist.

Es versteht sich, dass die vorstehend genannten Ausgestaltungen auch miteinander kombiniert werden können. Beispielsweise kann die zumindest eine Seilanbindungsstelle von der Krafteinleitungsstelle sowohl in Richtung quer zur Längsachse des Hubschraubers als auch in Richtung der Längsachse des Hubschraubers beabstandet sein, wodurch sich durch die Kombination dieser Ausgestaltungen eine günstige Lage des Lastaufnahmeelements (im abgelassenen Zustand) in Bezug auf den Schwerpunkt des Hubschraubers finden lässt.

Wenn der Hubschrauber ein Kufengestell aufweist, ist die zumindest eine Seilanbindungsstelle vorzugsweise am Kufengestell angeordnet.

Die Anordnung der zumindest einen Seilanbindungsstelle am Kufengestell hat den Vorteil, dass die Seilanbindungsstelle für eine Bedienungsperson leicht zugänglich ist, was insbesondere dann von Vorteil ist, wenn das freie Ende des Seils nicht permanent an der Seilanbindungsstelle angeschlagen bleibt, sondern erst vor einem Lasthebeeinsatz an der Seilanbindungsstelle angeschlagen wird.

In einer weiteren bevorzugten Ausgestaltung weist das Lastaufnahmeelement zumindest eine Umlenkrolle auf, über die das Lastaufnahmeelement entlang des Seils beweglich geführt ist.

Diese Maßnahme hat den Vorteil, dass das Lastaufnahmeelement entlang des Seils im Wesentlichen ohne Reibung beweglich geführt ist, wodurch sich insbesondere beim Ablassen des Lastaufnahmeelements dieses stets zum tiefsten Punkt bewegen kann. Diese Ausgestaltung erhöht somit in vorteilhafter Weise die Betriebssicherheit der Lasthebevorrichtung. Ein weiterer Vorteil besteht darin, dass bei einem Pendeln der Last in der Ebene der beiden Seilabschnitte beidseits der Umlenkungsstelle eine Dämpfung der Pendelbewegung erreicht werden kann.

Alternativ kann das Lastaufnahmeelement jedoch auch ein Gleitumlenkelement aufweisen, an dem das Seil gleitend geführt ist.

Die vorstehend genannte Ausgestaltung hat den Vorteil geringerer Kosten bei der Herstellung der Lasthebevorrichtung.

Im Zusammenhang mit den beiden zuvor genannten Ausgestaltungen ist es bevorzugt, wenn das Lastaufnahmeelement einen Topf aufweist, in dem die Umlenkrolle oder das Gleitumlenkelement angeordnet ist.

In dieser Ausgestaltung ist das Seil in den Topf hineingeführt, dort um die Umlenkrolle oder das Gleitumlenkelement gelegt und tritt an anderer Stelle aus dem Topf wieder aus. Damit das Seil nicht unerwünscht aus dem Topf ausrauscht, wenn das freie Ende des Seils nicht an der Seilanbindungsstelle angeschlagen ist, kann am freien Ende des Seils ein Stopper angeordnet sein, der ein Ausrauschen des Seils vermeidet.

In einer weiteren bevorzugten Ausgestaltung ist das freie Ende des Seils an der zumindest einen Seilanbindungsstelle mittels eines schnell lösbaren Verschlusses festlegbar.

Ein solcher schnell lösbarer Verschluss kann beispielsweise ein Schäkel oder ein Karabinerhaken sein, der sich zum Anschlagen des freien Endes des Seils an der Seilanbindungsstelle leicht bedienen lässt.

In einer weiteren bevorzugten Ausgestaltung weist der Seilspeicher eine Winde, insbesondere Motorwinde, auf.

Im Rahmen der Erfindung ist es möglich, die Lasthebevorrichtung auch ohne eine Winde zu betreiben, indem beispielsweise der Seilspeicher einfach dadurch realisiert ist, dass das Seil aufgeschossen in der Zelle des Hubschraubers oder an der Zelle des Hubschraubers bereitgehalten wird und bei einem Einsatz zum Bergen einer Person nach und nach herabgelassen wird, und das Seil dann an der Krafteinleitungsstelle am Hubschrauber angreift. Die Verwendung einer Winde, insbesondere Motorwinde, hat jedoch den Vorteil einer leichteren Bedienbarkeit, insbesondere beim Heben schwerer Lasten. Die Winde kann am Hubschrauber in fester Position oder verfahrbar montiert sein, wie dies an sich bereits bekannt ist. Die Winde kann selbstverständlich in herkömmlicher Weise im "Einseilbetrieb", aber auch im erfindungsgemäßen "Zweiseilbetrieb" verwendet werden.

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: schematisch eine erfindungsgemäße Lasthebevorrichtung für einen Hubschrauber in einem ersten Betriebszustand und in einer Vorderansicht des Hubschraubers;
- Fig. 2: die Lasthebevorrichtung in einem zweiten Betriebszustand;
- Fig. 3: die Lasthebevorrichtung in einem dritten Betriebszustand;
- Fig. 4: ein weiteres Ausführungsbeispiel einer Lasthebevorrichtung für einen Hubschrauber in einer Seitenansicht des Hubschraubers; und
- Fig. 5: eine Abwandlung der Lasthebevorrichtung in Fig. 4.

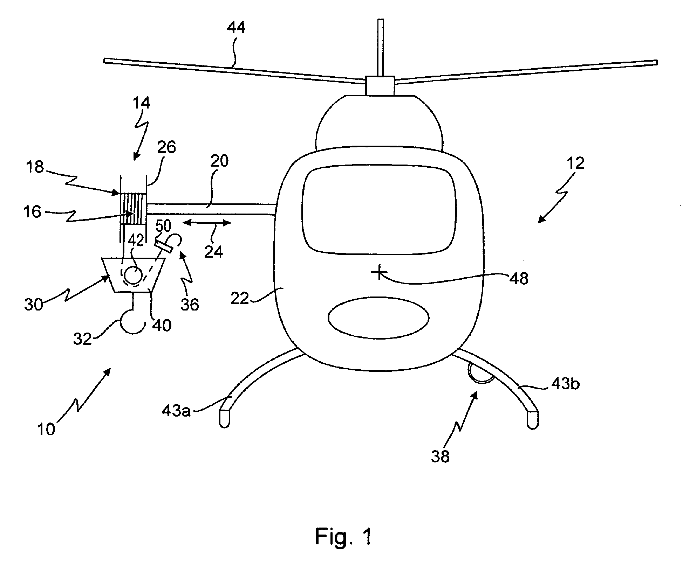

In Fig. 1 bis 3 ist eine mit dem allgemeinen Bezugszeichen 10 versehene Lasthebevorrichtung für einen Hubschrauber 12 in drei verschiedenen Betriebsstellungen dargestellt.

Die Lasthebevorrichtung 10 wird beispielsweise dazu verwendet, mit dem Hubschrauber 12 Personen zu bergen. Einsatzgebiet solcher Bergungen können beispielsweise das Gebirge oder die See sein.

Die Lasthebevorrichtung 10 weist einen Seilspeicher 14 auf, in dem eine Vorratslänge eines Seils 16 gespeichert ist.

Der Seilspeicher 14 ist in dem gezeigten Ausführungsbeispiel als Winde, insbesondere Motorwinde 18, ausgebildet. Die Winde 18 kann von üblicher Bauart sein, wie sie in Lasthebevorrichtungen für Hubschrauber verwendet wird. Die Winde 18 ist in dem gezeigten Ausführungsbeispiel an einem Ausleger 20 montiert, wobei der Ausleger 20 an der Zelle 22 des Hubschraubers 12 festgelegt ist. Der Ausleger 20 kann insbesondere gemäß einem Doppelpfeil 24 verfahrbar ausgebildet sein, so dass die Motorwinde 18, wenn sie nicht für einen Lasthebeeinsatz gebraucht wird, an die Zelle 22 heran oder in diese hinein verfahren werden kann und für einen Einsatz in die in Fig. 1 bis 3 dargestellte Position gebracht werden kann.

Die Motorwinde 18 kann eine Seiltrommel 26 aufweisen, auf der das Seil 16 gespeichert ist.

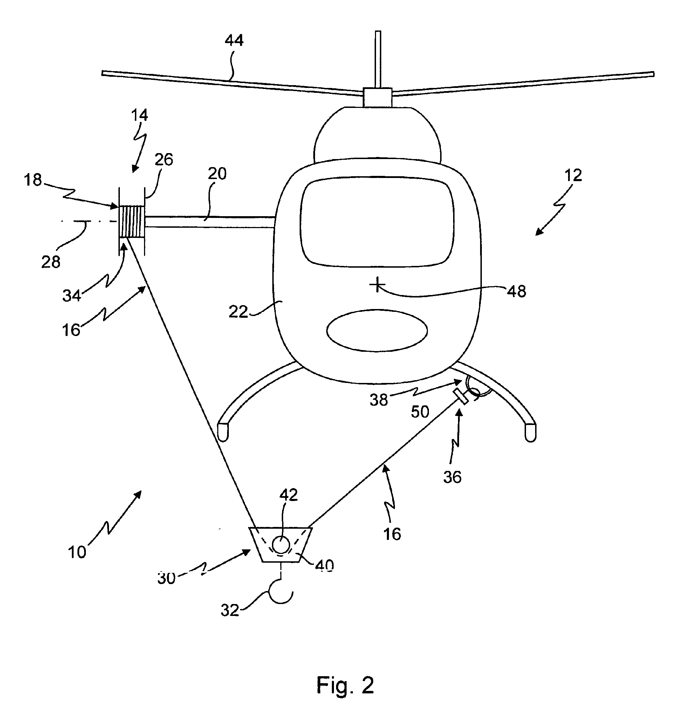

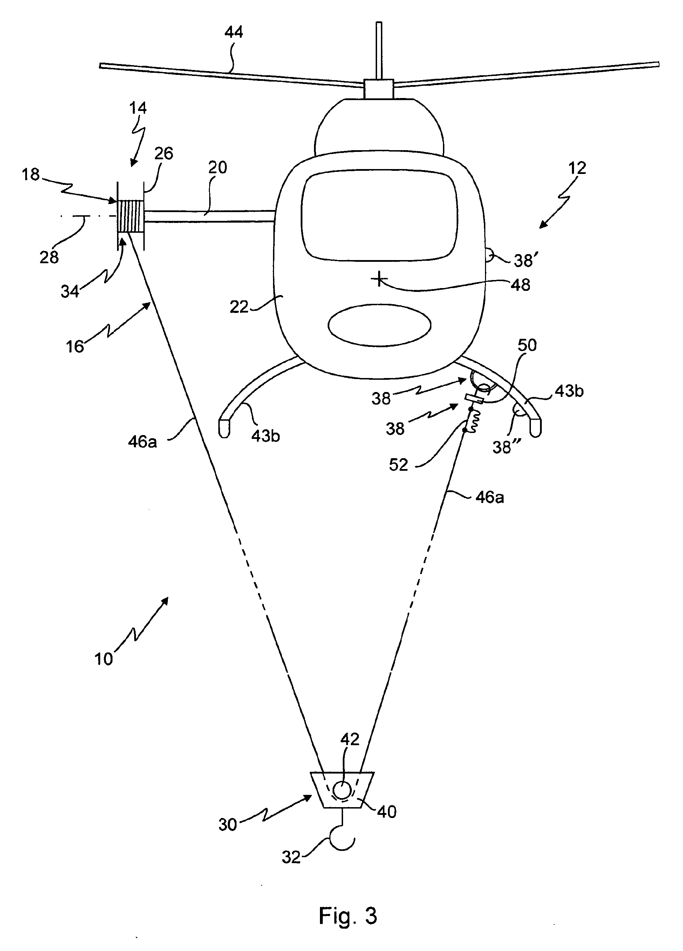

Durch Drehen der Seiltrommel 26 um eine Drehachse 28 (Fig. 2 und 3) kann das Seil 16 von der Seiltrommel 26 abgewickelt bzw. auf diese aufgewickelt werden.

Das Seil 16 ist einerseits am Hubschrauber 12 festgelegt, wobei das Seil 16 im gezeigten Ausführungsbeispiel über die Motorwinde 18 am Hubschrauber festgelegt ist.

An dem Seil 16 ist ein Lastaufnahmeelement 30 angeordnet.

An dem Lastaufnahmeelement 30 kann eine nicht dargestellte zu hebende Last festgelegt werden. Hierzu weist das Lastaufnahmeelement 30 beispielhaft einen Lasthaken 32 auf.

Das Seil 16 kann von dem Seilspeicher 14, d.h. genauer der Motorwinde 18, entnommen werden, um das Lastaufnahmeelement 30 vom Hubschrauber 12 in die Tiefe abzulassen.

In Fig. 1 ist der Zustand der Lasthebevorrichtung 10 dargestellt, in dem das Seil 16 im Wesentlichen vollständig im Seilspeicher 14 gespeichert ist, so dass sich das Lastaufnahmeelement 30 nahe am Hubschrauber 12 befindet. Fig. 3 zeigt den Zustand der Lasthebevorrichtung 10, in dem das Lastaufnahmeelement 30 durch Entnehmen von Seil 16 von dem Seilspeicher 14, d.h. durch Abwickeln des Seils 16 von der Seiltrommel 26, in die Tiefe abgelassen ist, wobei das Seil 16 in Fig. 3 teilweise mit unterbrochenen Linien dargestellt ist, um zu veranschaulichen, dass das Lastaufnahmeelement 30 sich weit unterhalb des Hubschraubers 12 befindet, beispielsweise in einem Abstand von 10 bis 50 m unterhalb des Hubschraubers 12. Fig. 2 zeigt einen Zwischenzustand zwischen den Zuständen der Lasthebevorrichtung 10 in Fig. 1 und 3.

Hubschrauberseitig greift das Seil 16 beim Ablassen bzw. Hochziehen des Lastaufnahmeelements 30 einerseits an einer Krafteinleitungsstelle 34 an. Die Krafteinleitungsstelle 34 wird in dem gezeigten Ausführungsbeispiel durch die jeweilige momentane Abwickelstelle des Seils 16 von der Seiltrommel 26 bestimmt. Die Krafteinleitungsstelle 34 befindet sich bei dieser Ausgestaltung somit in unmittelbarer Nähe zum Seilspeicher 14. Es versteht sich jedoch, dass die Krafteinleitungsstelle 34 und der Seilspeicher 14 auch voneinander entfernt sein können. So kann beispielsweise auch die Windenanordnung gemäß dem eingangs genannten Dokument DE 33 23 513 A1 für die Zwecke der vorliegenden Erfindung verwendet werden, bei der die Winde in der Zelle 22 des Hubschraubers angeordnet ist, und das Seil 16 von der Winde ausgehend über einen Ausleger, beispielsweise den Ausleger 20, aus der Zelle 22 des Hubschraubers 12 herausgeführt wird und von dort beispielsweise über eine Umlenkrolle nach unten abhängt. In diesem Fall stellt dann die am Ausleger 20 vorhandene Rolle die Krafteinleitungsstelle des Seils 16 dar.

Das Seil 16 weist ein freies Ende 36 auf. Die Lasthebevorrichtung 10 weist zumindest eine von der Krafteinleitungsstelle 34 beabstandete Seilanbindungsstelle 38 auf, an der das freie Ende 36 des Seils 16 festgelegt werden kann bzw. festgelegt ist. Im Betriebszustand der Lasthebevorrichtung 10 ist das Seil 16 somit über eine Zweipunktanbindung mit dem Hubschrauber 12 verbunden, und zwar zum einen an der jeweiligen Krafteinleitungsstelle 34, und zum anderen an der Seilanbindungsstelle 38. Damit bei dieser Art der Anbindung des Seils 16 am Hubschrauber 12 das Lastaufnahmeelement 30 sich stets beim Entnehmen von Seil 16 von dem Seilspeicher 14 nach unten bewegt, ist das Lastaufnahmeelement 30 entlang des Seils 16 beweglich an dem Seil 16 angeordnet.

Das Lastaufnahmeelement 30 weist in dem gezeigten Ausführungsbeispiel einen Topf 40 auf, in dem eine Umlenkrolle 42 angeordnet ist, um die das Seil 16 herumgeführt ist, wodurch das Lastaufnahmeelement 30 sich entlang des Seils 16 bewegen kann. Beim Ablassen des Lastaufnahmeelements 30 befindet sich dieses somit stets an der tiefsten Stelle zwischen der Seilanbindungsstelle 38 und der Krafteinleitungsstelle 34. Beim Ablassen des Lastaufnahmeelements 30 durch Entnehmen von Seil 16 vom Seilspeicher 14 und beim Anheben des Lastaufnahmeelements 30 durch Zurückführen des Seils 16 in den Seilspeicher 14 findet somit jeweils eine Relativbewegung zwischen dem Lastaufnahmeelement 30 und dem Seil 16 statt.

Nachfolgend wird nun die Funktionsweise der Lasthebevorrichtung 10 beschrieben.

In Fig. 1 ist der Zustand dargestellt, bei dem das Seil 16 im Wesentlichen vollständig im Seilspeicher 14 gespeichert ist. Das Lastaufnahmeelement 30 befindet sich dabei entsprechend in Nähe zur Krafteinleitungsstelle 34.

Durch Entnehmen des Seils 16 von dem Seilspeicher 14, im vorliegenden Fall durch Abwickeln des Seils 16 von der Motorwinde 18, bewegt sich das Lastaufnahmeelement 30 zunächst in Schwerkraftrichtung nach unten. Eine Besatzungsperson des Hubschraubers 12 kann nun das freie Ende 36 des Seils 16 greifen. Wenn der Hubschrauber 12 wie gezeigt ein Kufengestell 43a, 43b aufweist, führt die Besatzungsperson das freie Ende 36 unter dem Kufengestell 42 hindurch und legt das freie Ende 36 an der Seilanbindungsstelle 38 fest. Das freie Ende 36 des Seils 16 kann dazu einen schnell lösbaren Verschluss aufweisen, beispielsweise einen Karabinerhaken oder einen Schäkel, und die Seilanbindungsstelle 38 kann beispielsweise als Einhängeöse ausgebildet sein. Nach dem Festlegen des freien Endes 36 des Seils 16 befindet sich die Lasthebevorrichtung 10 in einem Zustand, wie er in Fig. 2 dargestellt ist. Durch weiteres Entnehmen des Seils 16 aus dem Seilspeicher 14 bewegt sich nun das Lastaufnahmeelement 30 aufgrund der Relativbewegung zwischen dem Lastaufnahmeelement 30 und dem Seil 16 weiter nach unten, bis sich das Lastaufnahmeelement 30 am Boden am Ort der Bergungsstelle, an der beispielsweise eine verunglückte Person geborgen werden soll, befindet. Die vorstehend beschriebenen Abläufe finden bei laufendem Rotor 44 des Hubschraubers 12 statt, wobei es nicht erforderlich ist, dass der Hubschrauber 12 dabei im Vorwärtsflug ist, sondern der Hubschrauber 12 kann während dieser Vorgänge in der Luft schweben.

Wie aus insbesondere Fig. 3 hervorgeht, bildet das Seil 16 insgesamt eine V-förmige Anordnung, wobei sich ein erster Seilabschnitt 46a von der Krafteinleitungsstelle 34 zum Lastaufnahmeelement 30, genauer gesagt zur Umlenkrolle 42, erstreckt, und sich von dort ein zweiter Seilabschnitt 46b zur Seilanbindungsstelle 38 erstreckt. Durch die sich daraus ergebende V-förmige Anordnung der Seilabschnitte 46a und 46b wird vermieden, dass die beim Laufen des Rotors 44 entstehenden, nach unten gerichteten rotatorischen Abwinde das Seil 16 in Rotation versetzen, so dass auch die am Lastaufnahmeelement 30 angehängte Last nicht in Rotation versetzt wird.

Bei dem Ausführungsbeispiel gemäß Fig. 1 bis 3 ist die Position der Seilanbindungsstelle 38 so gewählt, dass sie von der Krafteinleitungsstelle 34 in Bezug auf eine Längsachse 48 des Hubschraubers 12 in Richtung quer zur Längsachse 48 beabstandet ist, wobei sich die Krafteinleitungsstelle 34 in der Zeichnung und in Vorwärtsflugrichtung des Hubschraubers 12 gesehen im Abstand von der Längsachse 48 rechts von dieser befindet, und sich die Seilanbindungsstelle 38 entsprechend links von der Längsachse 48 und in Abstand zu dieser befindet. Diese Anordnung bewirkt, wie ein Vergleich der Fig. 2 und 3 ergibt, dass das Lastaufnahmeelement 30 beim Ablassen in die Tiefe zunehmend unter den Hubschrauber 12 gelangt, d.h. zunehmend näher zur Längsmittelebene des Hubschraubers 12, wodurch Kippmomente, die bei an dem Lastaufnahmeelement 30 angehängter Last ein Kippen des Hubschraubers 12 um die Längsachse 48 bewirken können, reduziert werden, auch wenn die Krafteinleitungsstelle 34 von der Längsmittelebene des Hubschraubers 12 bzw. vom Schwerpunkt des Hubschraubers 12 weit beabstandet ist, wie in Fig. 1 bis 3 dargestellt ist.

In dem gezeigten Ausführungsbeispiel, bei dem der Hubschrauber 12 ein Kufengestell 43a, 43b aufweist, befindet sich die Seilanbindungsstelle 38 beispielsweise an dem Kufengestell 43b. Die Seilanbindungsstelle 38 kann sich jedoch auch seitlich an der Zelle 22 befinden, wie in Fig. 3 mit dem Bezugszeichen 38' angedeutet ist. Die Wahl der Position der Seilanbindungsstelle 38 an dem Kufengestell 43b hat jedoch den Vorteil einer größeren Beabstandung der Seilanbindungsstelle 38 von der Längsmittelebene des Hubschraubers 12. So kann die Seilanbindungsstelle 38 auch am äußeren Ende des Kufengestells 43b angeordnet sein, wie in Fig. 3 mit 38" angedeutet ist.

Während bei dem Ausführungsbeispiel gemäß Fig. 1 bis 3 die Seilanbindungsstelle 38 von der Krafteinleitungsstelle 34 in Richtung quer zur Längsachse 48 beabstandet ist, und zwar wird der Abstand in Bezug auf die baulichen Gegebenheiten des Hubschraubers 12 so groß wie möglich gewählt, kann die Seilanbindungsstelle 38 von der Krafteinleitungsstelle 34 zusätzlich auch in Richtung der Längsachse 48 beabstandet sein. So kann beispielsweise die Krafteinleitungsstelle 34 am in Vorwärtsflugrichtung des Hubschraubers 12 gesehen hinteren Ende der Zelle 22 angeordnet sein und die Seilanbindungsstelle 38 auf Höhe des vorderen Endes des Kufengestells 43b. Hierdurch werden zusätzlich Kippmomente um eine zur Längsachse 48 senkrecht verlaufende Querachse reduziert, d.h. das Lastaufnahmeelement 30 gelangt dann auch in Bezug auf die Längsachse 48 weiter unter den Schwerpunkt des Hubschraubers 12.

Anstatt wie in der Zeichnung dargestellt, kann an der Seilanbindungsstelle 38 auch ein Hilfsseil angeschlagen sein, an dem das freie Ende 36 des Seils 16 befestigt wird oder ist. Das Ende des Hilfsseils, an dem das freie Ende 36 dann befestigt wird, kann im Nichtgebrauchszustand der Vorrichtung 10 für eine leichte Zugänglichkeit außenseitig an der Zelle 22, vorzugsweise auf der gleichen Seite, auf der der Seilspeicher 14 angeordnet ist, bereitgestellt werden. Dabei kann das Hilfsseil, wenn der Hubschrauber ein Kufengestell hat, unter der seilspeicherseitigen Kufe vorbeigeführt sein.

Um zu vermeiden, dass sich das Lastaufnahmeelement 30 in dem in Fig. 1 gezeigten Betriebszustand von dem Seil 16 löst und herunterfällt, ist an dem freien Ende 36 des Seils 16 beispielsweise ein Stopper 50 am Seil 16 festgelegt, der verhindert, dass das Seil 16 aus dem Lastaufnahmeelement 30 ausrauscht.

Wenn der Stopper 50 in größerem Abstand zur Seilanbindungsstelle am Seil 16 positioniert ist als in Fig. 2 oder 3 dargestellt, bewirkt er beim Heben der Last außerdem, dass das Lastaufnahmeelement 30 ab dem Moment, in dem der Stopper 50 am Lastaufnahmeelement 30 anschlägt, beim weiteren Einholen des Seils 16 stärker seitlich von der Längsmittelebene des Hubschraubers weg zum Seilspeicher 14 hin gezogen wird, wodurch die Last leichter an dem Kufengestell 43a vorbei nach oben und leichter in die Zelle 22 geborgen werden kann.

An dem Seil 16 kann ferner, wie nur in Fig. 3 dargestellt ist, eine Seilkappvorrichtung 52, beispielsweise eine pyrotechnische Seilkappvorrichtung, vorhanden sein, um das Lastaufnahmeelement 30 im Notfall abwerfen zu können, um eine gefährliche Flugsituation zu vermeiden. Die Seilkappvorrichtung 52 trennt das Seil 16 vor dem Festlegepunkt des Seils 16 an der Seilanbindungsstelle 38 und noch auf der dem Lastaufnahmeelement 30 zugewandten Seite des Stoppers 50, so dass beim Kappen des Seils 16 an der Seilkappvorrichtung 52 das Seil 16 aus dem Lastaufnahmeelement 30 ausrauschen kann und das Lastaufnahmeelement 30 somit abfallen kann.

Die bewegliche Anordnung des Lastaufnahmeelements 30 relativ zum Seil 16 führt des Weiteren zu einer Krafthalbierung am Seilabschnitt 46a, so dass zum Anheben einer Last mittels des Lastautnahmeelements 30 zwar der Zugweg des Seils 16 verdoppelt, die dazu erforderliche Kraft jedoch halbiert wird.

Das Seil 16 ist insbesondere ein Drahtseil und weist insgesamt eine Länge von etwa 90 m auf, so dass das Lastaufnahmeelement 30 insgesamt um etwa 45 m in die Tiefe abgelassen werden kann.

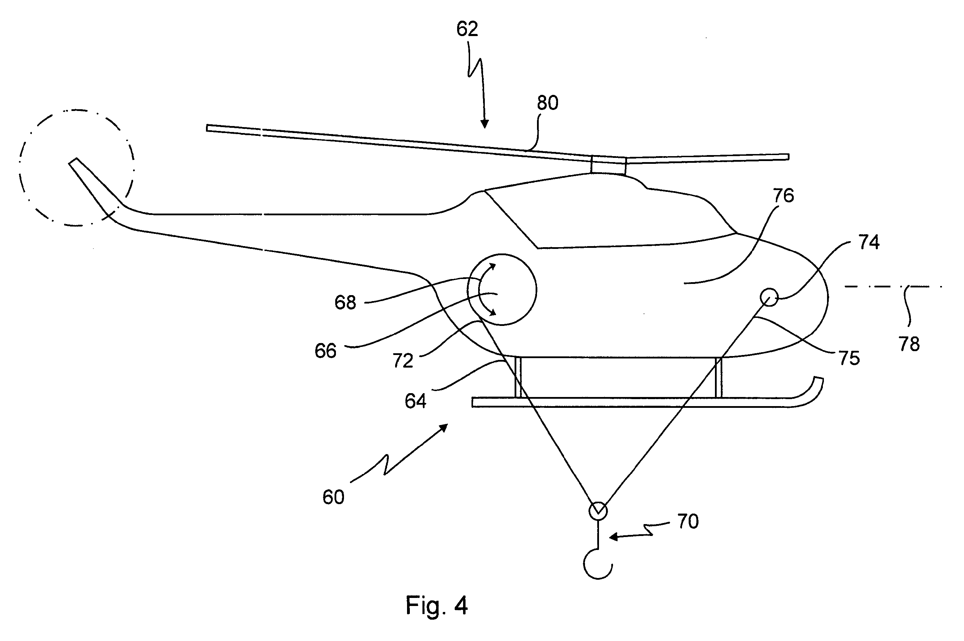

In Fig. 4 ist ein weiteres Ausführungsbeispiel einer Lasthebevorrichtung 60 für einen Hubschrauber 62 dargestellt. Die Lasthebevorrichtung 60 weist ein Seil 64, einen Seilspeicher 66, beispielsweise eine Winde, wie mit einem Doppelpfeil 68 angedeutet ist, und ein Lastaufnahmeelement 70 auf. Das Lastaufnahmeelement 70 ist relativ zum Seil 64 entlang des Seils 64 beweglich, wobei hinsichtlich der Ausgestaltung des Lastaufnahmeelements 70 beispielsweise die Ausgestaltung gemäß dem Ausführungsbeispiel in den Fig. 1 bis 3 gewählt werden kann.

Im Unterschied zu dem vorherigen Ausführungsbeispiel befinden sich eine Krafteinleitungsstelle 72 für das Seil 64 und eine Seilanbindungsstelle 74 für ein freies Ende 75 des Seils 64 auf einer selben Seite außen an einer Zelle 76 des Hubschraubers 62 und sind somit lediglich in Richtung der Längsachse 78 voneinander beabstandet. Auch durch diese Anordnung der Lasthebevorrichtung 60 wird vermieden, dass eine an dem Lastaufnahmeelement 70 angehängte Last bei laufendem Rotor 80 in Rotation um die Seilachse des Seils 64 in Rotation versetzt wird, was wiederum die V-förmige Gesamtkonfiguration des Seils 64 bewerkstelligt.

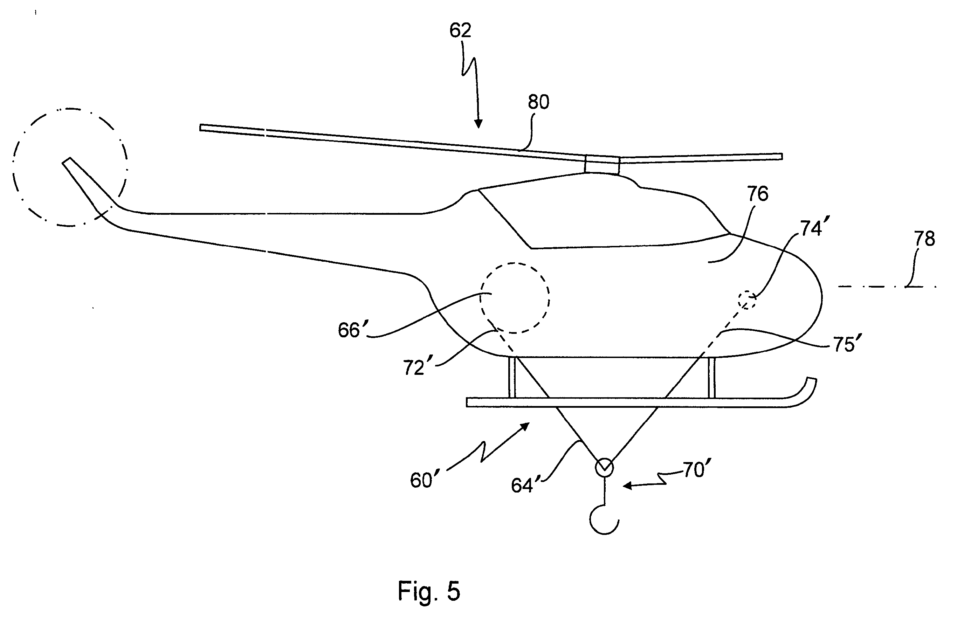

Fig. 5 zeigt eine Abwandlung der Lasthebevorrichtung 60 in Fig. 4, die mit dem Bezugszeichen 60' versehen ist. Bei der Lasthebevorrichtung 60' befindet sich die Krafteinleitungsstelle 72' und die Seilanbindungsstelle 74' etwa in der Längsmittelebene des Hubschraubers 62. In diesem Fall kann der Seilspeicher 66 beispielsweise in der Zelle 76 des Hubschraubers 62 angeordnet sein. Die Seilanbindungsstelle 74' kann in diesem Fall ebenfalls in der Zelle 76 angeordnet sein, wobei das Seil 64' in einem solchen Fall durch eine Bodenluke in der Zelle 76 des Hubschraubers 62 aus dem Hubschrauber 62 nach unten herausgelassen werden kann. Das Seil 64' verläuft im Fall, dass der Hubschrauber 62 wie dargestellt ein Kufengestell aufweist, zwischen den beidseitigen Kufen des Hubschraubers 62.

Aus dem Vorstehenden ergibt sich, dass hinsichtlich der Anordnung der Krafteinleitungsstelle 72' und der Seilanbindungsstelle 74' Abwandlungen möglich sind, die sich für den Fachmann aufgrund der vorstehenden Beschreibung leicht erschließen. Mit der Maßgabe, dass die Wahl der Positionen der Krafteinleitungsstelle 72' und der Seilanbindungsstelle 74' so getroffen werden sollte, dass die Seilanbindungsstelle 74' von der Krafteinleitungsstelle 72' möglichst weit beabstandet ist, um eine Rotation der an dem Seil aufgehängten Last zu vermeiden, kann bei der Wahl der Position der zusätzliche Aspekt der Verringerung von Kippmomenten durch eine angehängte Last berücksichtigt werden, wie oben beschrieben wurde.

## Patentansprüche

1. Hubschrauber, mit einer Lasthebevorrichtung , die ein Seil (16; 64; 64'), von dem in einem Seilspeicher (14; 66; 66') eine Vorratslänge vorhanden ist, wobei das Seil (16; 64; 64') einerseits am Hubschrauber (12; 62) festgelegt ist und andererseits ein freies Ende (36; 75; 75') aufweist, und ein Lastaufnahmeelement (30; 70; 70') aufweist, das an dem Seil (16; 64; 64') angeordnet ist und an dem eine zu hebende Last festgelegt werden kann, wobei das Seil (16; 64; 64') von dem Seilspeicher (14; 66; 66') entnommen werden kann, um das Lastaufnahmeelement (30; 70; 70') vom Hubschrauber (12; 62) in die Tiefe abzulassen, wobei das Seil (16; 64; 64') beim Ablassen bzw. Hochziehen des Lastaufnahmeelements (30; 70; 70') an einer Krafteinleitungsstelle (34; 72; 72') hubschrauberseitig angreift, wobei hubschrauberseitig zumindest eine von der Krafteinleitungsstelle (34; 72; 72') beabstandete Seilanbindungsstelle (38; 74; 74') vorhanden ist, an der das freie Ende (36; 75; 75') des Seils (16; 64; 64') festlegbar bzw. festgelegt ist, **dadurch gekennzeichnet, dass** das Lastaufnahmeelement (30; 70; 70') entlang des Seils (16; 64; 64') beweglich an dem Seil (16; 64; 64') angeordnet ist, dass die zumindest eine Seilanbindungsstelle (38) von der Krafteinleitungsstelle (34) in Richtung quer zur Längsachse (48) des Hubschraubers (12) beabstandet ist, und dass die Krafteinleitungsstelle (34) auf einer Seite der Längsachse (48) des Hubschraubers (12) mit Abstand zu dieser und die zumindest eine Seilanbindungsstelle (38) auf der anderen Seite der Längsachse (48) mit Abstand zu dieser angeordnet ist.

2. Hubschrauber, mit einer Lasthebevorrichtung, die ein Seil (16; 64; 64'), von dem in einem Seilspeicher (14; 66; 66') eine Vorratslänge vorhanden ist, wobei das Seil (16; 64; 64') einerseits am Hubschrauber (12; 62) festgelegt ist und andererseits ein freies Ende (36; 75; 75') aufweist, und ein Lastaufnahmeelement (30; 70; 70') aufweist, das an dem Seil (16; 64; 64') angeordnet ist und an dem eine zu hebende Last festgelegt werden kann, wobei das Seil (16; 64; 64') von dem Seilspeicher (14; 66; 66') entnommen werden kann, um das Lastaufnahmeelement (30; 70; 70') vom Hubschrauber (12; 62) in die Tiefe abzulassen, wobei das Seil (16; 64; 64') beim Ablassen bzw. Hochziehen des Lastaufnahmeelements (30; 70; 70') an einer Krafteinleitungsstelle (34; 72; 72') hubschrauberseitig angreift, wobei hubschrauberseitig zumindest eine von der Krafteinleitungsstelle (34; 72; 72') beabstandete Seilanbindungsstelle (38; 74; 74') vorhanden ist, an der das freie Ende (36; 75; 75') des Seils (16; 64; 64') fest-legbar bzw. festgelegt ist, und wobei die zumindest eine Seilanbindungsstelle (38; 74; 74') von der Krafteinleitungsstelle (34; 71; 72') in Richtung der Längsachse (48; 78) des Hubschraubers (12; 62) beanstandet ist, **dadurch gekennzeichnet, dass** das Lastaufnahmeelement (30; 70; 70') entlang des Seils (16; 64; 64') beweglich an dem Seil (16; 64; 64') angeordnet ist, und dass die zumindest eine Seilanbindungsstelle (74) und die Krafteinleitungsstelle (72) seitlich auf einer selben Seite am Hubschrauber (62) angeordnet sind.

3. Hubschrauber nach Anspruch 1, **dadurch gekennzeichnet, dass** die zumindest eine Seilanbindungsstelle (38; 74; 74') von der Krafteinleitungsstelle (34; 72; 72') in Richtung der Längsachse (48; 78) des Hubschraubers (12; 62) beabstandet ist.

4. Hubschrauber nach einem der Ansprüche 1 bis 3, wobei der Hubschrauber (12) ein Kufengestell (43a, 43b) aufweist, **dadurch gekennzeichnet, dass** die zumindest eine Seilanbindungsstelle (38) am Kufengestell (43b) angeordnet ist.

5. Hubschrauber nach einem der Ansprüche 1 bis 4, **dadurch gekennzeichnet, dass** das Lastaufnahmeelement (30) zumindest eine Umlenkrolle (42) aufweist, über die das Lastaufnahmeelement (30) entlang des Seils (16) beweglich geführt ist.

6. Hubschrauber nach einem der Ansprüche 1 bis 4, **dadurch gekennzeichnet, dass** das Lastaufnahmeelement ein Gleitumlenkelement aufweist, an dem das Seil gleitend geführt ist.

7. Hubschrauber nach Anspruch 5 oder 6, **dadurch gekennzeichnet, dass** das Lastaufnahmeelement (30) einen Topf (40) aufweist, in dem die Umlenkrolle (42) oder das Gleitumlenkelement angeordnet ist.

8. Hubschrauber nach einem der Ansprüche 1 bis 7, **dadurch gekennzeichnet, dass** das freie Ende (36) des Seils (16) an der zumindest einen Seilanbindungsstelle (38) mittels eines schnell lösbaren Verschlusses festlegbar ist.

9. Hubschrauber nach einem der Ansprüche 1 bis 8, **dadurch gekennzeichnet, dass** der Seilspeicher (14) eine Winde (18), insbesondere Motorwinde aufweist.

## Claims

1. A helicopter, comprising a load lifting apparatus, the load lifting apparatus having a cable (16; 64; 64'), of which a supply length is present in a cable store (14; 66; 66'), wherein the cable (16; 64, 64'), on the one hand, is secured on the helicopter (12; 62) and, on the other hand, has a free end (36; 75; 75'), and a load-bearing element (30; 70; 70'), which is arranged on the cable (16; 64; 64') and on which a load which is to be raised can be secured, wherein the cable (16; 64; 64') can be removed from the cable store (14; 66; 66') in order to lower the load-bearing element (30; 70; 70') downwards from the helicopter (12; 62), wherein the cable (16; 64; 64'), as the load-bearing element (30; 70; 70') is being lowered or pulled upwards, acts at a force-introduction location (34; 72; 72') on the helicopter, wherein at least one cable-attachment location (38; 74; 74') is present on the helicopter, and this cable-attachment location is spaced apart from the force-introduction location (34; 72; 72') and has, or can have, the free end (36; 75; 75') of the cable (16; 64; 64') secured on it, **characterized in that** the load-bearing element (30; 70; 70') is arranged on the cable (16; 64; 64') such that it can move along the cable (16; 64; 64'), that the at least one cable-attachment location (38) is spaced apart from the force-introduction location (34) in a direction transverse to the longitudinal axis (48) of the helicopter (12), and that the force-introduction location (34) is arranged on one side of the longitudinal axis (48) of the helicopter (12), at a distance from this longitudinal axis, and the at least one cable-attachment location (38) is arranged on the other side of the longitudinal axis (48), at a distance therefrom.

2. A helicopter, comprising a load lifting apparatus, the load lifting apparatus having a cable (16; 64; 64'), of which a supply length is present in a cable store (14; 66; 66'), wherein the cable (16; 64, 64'), on the one hand, is secured on the helicopter (12; 62) and, on the other hand, has a free end (36; 75; 75'), and a load-bearing element (30; 70; 70'), which is arranged on the cable (16; 64; 64') and on which a load which is to be raised can be secured, wherein the cable (16; 64; 64') can be removed from the cable store (14; 66; 66') in order to lower the load-bearing element (30; 70; 70') downwards from the helicopter (12; 62), wherein the cable (16; 64; 64'), as the load-bearing element (30; 70; 70') is being lowered or pulled upwards, acts at a force-introduction location (34; 72; 72') on the helicopter, wherein at least one cable-attachment location (38; 74; 74') is present on the helicopter, and this cable-attachment location is spaced apart from the force-introduction location (34; 72; 72') and has, or can have, the free end (36; 75; 75') of the cable (16; 64; 64') secured on it, wherein the at least one cable-attachment location (38; 74; 74') is spaced apart from the force-introduction location (34; 72; 72') in the direction of the longitudinal axis (48; 78) of the helicopter (12; 62), **characterized in that** the load-bearing element (30; 70; 70') is arranged on the cable (16; 64; 64') such that it can move along the cable (16; 64; 64'), and that the at least one cable-attachment location (74) and the force-introduction location (72) are arranged laterally on the same side of the helicopter (62).

3. The helicopter of claim 1, **characterized in that** the at least one cable-attachment location (38; 74; 74') is spaced apart from the force-introduction location (34; 72; 72') in the direction of the longitudinal axis (48; 78) of the helicopter (12; 62).

4. The helicopter of any one of Claims 1 through 3, wherein the helicopter (12) has a skid undercarriage (43a, 43b), **characterized in that** the at least one cable-attachment location (38) is arranged on the skid undercarriage (43b).

5. The helicopter of any one of Claims 1 through 4, **characterized in that** the load-bearing element (30) has at least one deflecting roller (42), via which the load-bearing element (30) is guided such that it can move along the cable (16).

6. The helicopter of any one of Claims 1 through 4, **characterized in that** the load-bearing element has a sliding-action deflecting element, on which the cable is guided with a sliding action.

7. The helicopter of Claim 5 or 6, **characterized in that** the load-bearing element (30) has a cup (40), in which the deflecting roller (42) or the sliding-action deflecting element is arranged.

8. The helicopter of any one of Claims 1 through 7, **characterized in that** the free end (36) of the cable (16) can be secured at the at least one cable-attachment location (38) by means of a rapid-release closure.

9. The helicopter of any one of Claims 1 through 8, **characterized in that** the cable store (14) has a winch (18), in particular a motor winch.

## Revendications

1. Hélicoptère avec un dispositif de soulèvement de charge qui présente un câble (16 ; 64 ; 64'), dont une longueur de réserve est contenue dans un réservoir de câble (14 ; 66 ; 66'), le câble (16 ; 64 ; 64') étant fixé d'un côté à l'hélicoptère (12 ; 62) et présentant de l'autre côté une extrémité libre (36 ; 75 ; 75'), et ledit hélicoptère présentant un élément de réception de charge (30 ; 70 ; 70') qui est disposé sur le câble (16 ; 64 ; 64') et sur lequel une charge à soulever peut être fixée, le câble (16 ; 64 ; 64') pouvant être retiré du réservoir de câble (14 ; 66 ; 66') afin d'abaisser l'élément de réception de charge (30 ; 70 ; 70') de l'hélicoptère, le câble (16 ; 64, 64') agissant côté hélicoptère lors de l'abaissement ou du relevage de l'élément de réception de charge (30 ; 70 ; 70') sur un point d'introduction de force (34 ; 72 ; 72'), au moins un point de liaison de câble (38 ; 74 ; 74') espacé du point d'introduction de force (34 ; 72 ; 72') étant présent côté hélicoptère, sur lequel l'extrémité libre (36 ; 75 ; 75') du câble (16 ; 64 ; 64') est ou peut être fixée, **caractérisé en ce que** l'élément de réception de charge (30 ; 70 ; 70') est disposé de manière mobile sur la longueur du câble (16 ; 64 ; 64'), **en ce que** l'au moins un point de liaison de câble (38) est espacé du point d'introduction de force (34) transversalement à l'axe longitudinal (48) de l'hélicoptère (12), et **en ce que** le point d'introduction de force (34) est disposé sur un côté de l'axe longitudinal (48) de l'hélicoptère (12) à distance de celui-ci et l'au moins un point de liaison de câble (38) est disposé de l'autre côté de l'axe longitudinal (48) à distance de celui-ci.

2. Hélicoptère avec un dispositif de soulèvement de charge qui présente un câble (16 ; 64 ; 64'), dont une longueur de réserve est contenue dans un réservoir de câble (14 ; 66 ; 66'), le câble (16 ; 64 ; 64') étant fixé d'un côté à l'hélicoptère (12 ; 62) et présentant de l'autre côté une extrémité libre (36 ; 75 ; 75'), et ledit hélicoptère présentant un élément de réception de charge (30 ; 70 ; 70') qui est disposé sur le câble (16 ; 64 ; 64') et sur lequel une charge à soulever peut être fixée, le câble (16 ; 64 ; 64') pouvant être retiré du réservoir de câble (14 ; 66 ; 66') afin d'abaisser l'élément de réception de charge (30 ; 70 ; 70') de l'hélicoptère (12 ; 62), le câble (16 ; 64, 64') agissant côté hélicoptère lors de l'abaissement ou du relevage de l'élément de réception de charge (30 ; 70 ; 70') sur un point d'introduction de force (34 ; 72 ; 72'), au moins un point de liaison de câble (38 ; 74 ; 74') espacé du point d'introduction de force (34 ; 72 ; 72') étant présent côté hélicoptère, sur lequel l'extrémité libre (36 ; 75 ; 75') du câble (16 ; 64 ; 64') est ou peut être fixée, et l'au moins un point de liaison de câble (38 ; 74 ; 74') étant espacé du point d'introduction de force (34 ; 72 ; 72') en direction de l'axe longitudinal (48 ; 78) de l'hélicoptère (12 ; 62), **caractérisé en ce que** l'élément de réception de charge (30 ; 70 ; 70') est disposé de manière mobile sur la longueur du câble (16 ; 64 ; 64') et **en ce que** l'au moins un point d'introduction de liaison de câble (74) et le point d'introduction de force (72) sont disposés latéralement sur un même côté de l'hélicoptère (12).

3. Hélicoptère selon la revendication 1, **caractérisé en ce que** l'au moins un point de liaison de câble (38 ; 74 ; 74') est espacé du point d'introduction de force (34 ; 72 ; 72') en direction de l'axe longitudinal (48 ; 78) de l'hélicoptère (12 ; 62).

4. Hélicoptère selon l'une quelconque des revendications 1 à 3, l'hélicoptère (12) présentant un châssis à patins (43a, 43b), **caractérisé en ce que** l'au moins un point de liaison de câble (38) est disposé sur le châssis à patins (43b).

5. Hélicoptère selon l'une quelconque des revendications 1 à 4, **caractérisé en ce que** l'élément de réception de charge (30) présente au moins un rouleau de déviation (42), par lequel l'élément de réception de charge (30) est guidé de manière mobile le long du câble (16).

6. Hélicoptère selon l'une quelconque des revendications 1 à 4, **caractérisé en ce que** l'élément de réception de charge présente un rouleau de déviation glissant, sur lequel le câble est guidé de manière glissante.

7. Hélicoptère selon la revendication 5 ou 6, **caractérisé en ce que** l'élément de réception de charge (30) présente un pot (40), dans lequel le rouleau de déviation (42) ou l'élément de déviation glissant est disposé.

8. Hélicoptère selon l'une quelconque des revendications 1 à 7, **caractérisé en ce que** l'extrémité libre (36) du câble (16) peut être fixée sur l'au moins un point de liaison de câble (38) à l'aide d'une fermeture détachable rapidement.

9. Hélicoptère selon l'une quelconque des revendications 1 à 8, **caractérisé en ce que** le réservoir de câble (14) présente un treuil (18), en particulier un treuil motorisé.
